# EUROPEAN PATENT APPLICATION

(11) **EP 3 879 452 A2**
(43) Date of publication of application: **15.09.2021**
(21) Application number: 21185339.5
(22) Date of filing: 13.07.2021
(51) Int. Cl.: G06K 9/34

(54) **METHOD AND APPARATUS FOR CHARACTER RECOGNITION AND PROCESSING**

(30) Priority: 18.12.2020 CN 202011506446
(71) Applicant: BEIJING BAIDU NETCOM SCIENCE AND TECHNOLOGY CO. LTD., 100085 Beijing (CN)
(72) Inventor: LV, Pengyuan, Beijing 100085 (CN); ZHANG, Chengquan, Beijing 100085 (CN)
(74) Representative: advotec.

(57) **Abstract**

The disclosure provides a method and an apparatus for character recognition and processing, belonging to a field of deep learning technology and a field of image processing technology. A character region is labelled (210) for each character contained in each sample image of a sample image set. A character category and a character position code corresponding to each character region are labelled (2200. A preset neural network model for character recognition is trained (230) based on the sample image set having labelled character regions, character categories and character position codes corresponding to the character regions.

## Description

### TECHNICAL FIELD

The disclosure relates to a field of deep learning technology and a field of image processing technology, and more particularly to a method and an apparatus for character recognition and processing.

### BACKGROUND

Generally, character recognition is a method for extracting text information from an image, which is widely used in finance, education, audit, transportation and many other areas related to national economy and people's livelihood.

In related arts, when performing the character recognition, recognized characters are arranged based on a relative occurrence sequence in a picture. For example, the recognized characters are arranged from left to right based on a sequence of these characters occurring in the picture. However, when characters of an actual word are not arranged in an order like the relative occurrence sequence in the picture, a character sequence consisted of recognized characters is unable to read due to disorder of the recognized characters.

### SUMMARY

The disclosure provides a method and an apparatus for character recognition and processing, which can recognize a sequence of characters.

According to a first aspect, a method for character recognition and processing is provided here. A respective character region is labelled for each character contained in each sample image of a sample image set. A respective character category and a respective character position code corresponding to each character region are labelled. A preset neural network model for character recognition is trained based on the sample image set having labelled character regions, character categories and character position codes corresponding to the character regions.

According to a second aspect, an apparatus for character recognition and processing is provided here. The apparatus includes: a first labelling module, a second labelling module, and a training module. The first labelling module is configured to label a respective character region for each character contained in each sample image of a sample image set. The second labelling module is configured to label a respective character category and a respective character position code corresponding to the character regions. The training module is configured to train a preset neural network model for character recognition based on the sample image set having character regions, character categories and character position codes corresponding to the character regions.

According to a third aspect, an electronic device is provided here. The electronic device includes: at least one processor; and a memory communicatively coupled to at least one processor. The memory stores instructions executable by the at least one processor. When the instructions are executed by the at least one processor, the at least one processor is caused to execute a method for character recognition and processing according to the first aspect.

According to a fourth aspect, a non-transitory computer-readable storage medium having computer instructions stored thereon is provided here. The computer instructions are configured to cause a computer to execute a method for character recognition and processing according to the first aspect.

According to a fifth aspect, a computer program product is provided here. When instructions stored in the computer program product are executed by a processor, a method for character recognition and processing according to the first aspect is implemented.

Embodiments of the disclosure at least provide the following beneficial effects.

The character region is labelled for each character contained in each sample image of the sample image set, and the character category as well as the character position code corresponding to each character region are labelled. Further, the preset neural network model for character recognition is trained based on the sample image set having labelled character regions, character categories and character position codes corresponding to the character regions. Therefore, characters and a relative order number of each character are recognized through the neutral network model. Characters are ordered based on the character position codes to obtain the relative order numbers, and thus a final result is obtained by combining characters, to achieve correctly ordering recognized characters.

It is to be understood that, the content described in the part is not intended to identify key or important features of embodiments of the disclosure, nor intended to limit the scope of the disclosure. Other features of the disclosure will be easy to understand through the following specification.

### BRIEF DESCRIPTION OF THE DRAWINGS

Drawings are intended to make those skilled in the art to well understand technical solution of the disclosure and do not constitute a limitation to the disclosure.
FIG. 1 is a schematic diagram illustrating a sample image according to embodiments of the disclosure.
FIG. 2 is a flowchart illustrating a method for character recognition and processing according to embodiments of the disclosure.
FIG. 3 is a schematic diagram illustrating a sample image according to embodiments of the disclosure.
FIG. 4 is a schematic diagram illustrating a sample image according to embodiments of the disclosure.
FIG. 5 is a schematic diagram illustrating a semantic segmentation image according to embodiments of the disclosure.
FIG. 6 is a flowchart illustrating a method for character recognition and processing according to embodiments of the disclosure.
FIG. 7 is a schematic diagram illustrating a scenario for character recognition and processing according to embodiments of the disclosure.
FIG. 8 is a block diagram illustrating an apparatus for character recognition and processing according to embodiments of the disclosure.
FIG. 9 is a block diagram illustrating an apparatus for character recognition and processing according to embodiments of the disclosure.
FIG. 10 is a block diagram illustrating an electronic device for implementing a method for character recognition and processing according to embodiments of the disclosure.

### DETAILED DESCRIPTION

Exemplary embodiments of the disclosure are described as below with reference to the accompanying drawings, which include various details of embodiments of the disclosure to facilitate understanding, and should be considered as merely exemplary. Therefore, those skilled in the art should realize that various changes and modifications may be made to the embodiments described herein without departing from the scope and spirit of the disclosure. Similarly, for clarity and conciseness, descriptions of well-known functions and structures are omitted in the following descriptions.

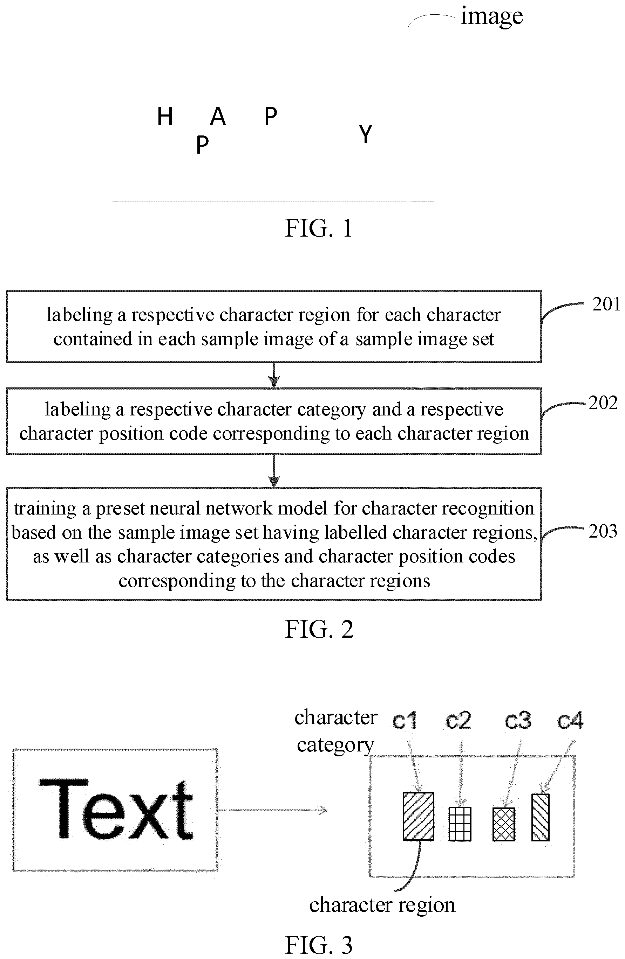

As mentioned above, the character sequence consisted of recognized characters may be wrong due to disorder of the recognized characters when performing the character recognition based on the relative occurrence position of characters in the picture. For example, as illustrated in FIG. 1, for a word "HAPPY", recognized characters may be in an order of "HPAPY" if the character recognition is performed based on the relative occurrence sequence of characters in the picture.

To solve the above technical problem, the disclosure provides a method for recognizing characters based on semantic segmentation, which determines a relative order of each recognized character in a final character sequence by predicting character position codes.

In detail, FIG. 2 is a flowchart illustrating a method for character recognition and processing according to embodiments of the disclosure. As illustrated in FIG. 2, the method includes the following.

At block 201, each character contained in each sample image of a sample image set is labelled using a respective character region.

The sample image set refers to a set of sample images, containing a large number of sample images. Each sample image contains multiple characters, including but not limited to English letters, numbers, Chinese characters, etc.

The character region may be provided for each character contained in the sample image. The character region may be a box enclosing the character and is configured to determine a position of the character.

It is to be noted that, depending on different application scenarios, the character regions may be provided for the characters in different manners as follows.

### Example one:

For each character contained in each image, positional coordinates of a character box corresponding to the character is obtained. The positional coordinates may include coordinates of a central pixel of the character, length and width of the character box. The length and the width of the character box may be determined based on coordinates of an uppermost pixel, coordinates of a lowermost pixel, coordinates of a leftmost pixel, and coordinates of a rightmost pixel of the character.

In addition, the character box can be contracted based on a preset contraction ratio and the positional coordinates, to differentiate different character regions and avoid a case that two identical characters adjacent to each other are identified as one character. The character region is labelled on the picture based on the positional coordinates of the contracted character box.

A value of the preset contraction ratio may be set based on experiments or based on a distance between adjacent characters. For example, a standard distance corresponding to a certain contraction ratio may be determined, and distances between central pixels of every two adjacent characters contained in the image are determined. If the distances are all greater than the standard distance, differences between the distances and the standard distance are obtained. If the differences are all greater than a preset distance threshold, it indicates that there is no risk of identifying the two adjacent characters as one. In this case, the certain contraction ratio may be set as 1. If one of the distances is less than the standard distance, the difference between the standard distance and the distance is obtained, and an increment value of the contraction ratio is determined based on the difference, where the difference is directly proportional to the increment value. Further, a final contraction ratio of the corresponding character box (i.e., any one of two adjacent character boxes corresponding to the distance less than the standard distance) is determined by adding the increment value to the certain contraction ratio.

For example, the sample image is illustrated in FIG. 3. In order to separate characters in a form of connectivity domain (i.e., characters are separated from each other, such that each separated result is a connectivity domain representing a respective character), each character box having the positional coordinates of (cx, cy, w, h) can be contracted to obtain a contracted character box having the positional coordinates of (cx, cy, w*r, h*r), where cx and cy represents coordinates of the central pixel of the character box, w represents the width of the character box, h represents the height of the character box, and r represents the contraction ratio.

### Example Two:

A semantic recognition model is obtained in advance through training based on deep learning technology. For each pixel contained in each sample image of the sample image set, a respective probability recognized by the semantic recognition mode that the pixel corresponds to each character category is determined. A character category having a largest probability value is determined as the character category for the pixel. A connectivity domain formed by pixels corresponding to a common character category is determined as the character region.

The character region may be configured to record pixel positions of the character box. The character region may be provided as lines in the image.

At block 202, each character region is labelled with a respective character category and a respective character position code.

To further recognize the relative order of each character, character categories and character position codes corresponding to the character regions can be provided on the picture. Sequence information (i.e., the relative orders) of multiple characters may be determined based on the character position codes.

It is to be noted that, the character position code refers to any information for deducing the relative order of the corresponding character or the character sequence, which will be described in detail with following examples.

### Example one:

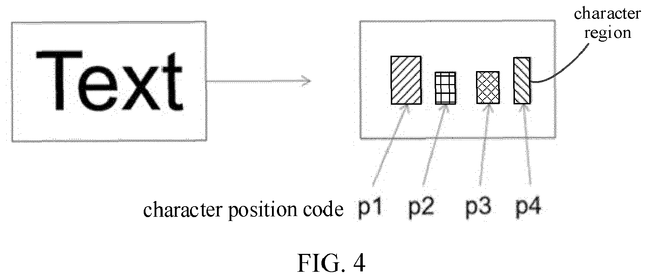

A preset length threshold of character string is obtained. A position index value of each character region is obtained. The position index value may be any information indicating a relative position of the character in the image. For example, a predictable length threshold of character string determined based on a recognition ability of the model may be L. For each character, the position index value refers to a relative order number i of the character in the image, where i is a positive integer. The larger the relative order number, the later the character occurs in the image. For example, a character "A" has a relative order number of 2, a character "C" has a relative order number of 1, and a character "N" has a relative order number of 3. In this case, the character "A" is after the character "C" in the image, and the character "N" is after the character "A" in the image. A calculation is performed based on the length threshold of character string and the position index value through a preset algorithm. The character position code corresponding to each character region is obtained based on the calculation result. For example, the preset algorithm is *pᵢ* ± 1 + *i*/*L,* where *pᵢ* represents the character position code, and i represents the relative order number of the character in the image. For example, in the sample image illustrated in FIG. 4, the character position code of the first character "T" is *p*₁ = 1-1 / *L.* The value of *pᵢ* indicates the relative order of each character, and thus, the character sequence can be determined based on the value of *pᵢ.*

In addition, the above preset algorithm may include calculating a ratio of the position index value to the preset length threshold of character string, or calculating a product of the position index value and the preset length threshold of character string.

Certainly, when the characters contained in the sample image are out of order, values of their *pᵢ* may not indicate the relative order numbers of the characters. For example, characters contained in the sample image are "Ttex", and after learning the character corresponding to *p*₂ should be after characters corresponding to *p*₃ and *p*₄.

### Example Two:

A respective distance between a character feature of each character having a certain order contained in a sample image and a character semantic feature is recognized. The distance between the character feature and the character semantic feature as well as the order of the character are determined as the character position code. The order may be the relative order number.

The character position code is determined based on two dimensions, i.e., the semantic and the order, to improve the accuracy of determining the character order.

The character category may be understood as referring to a character, such as character "A" or character "B" or the like. In this case, a character belonging to a character category means that the character is for example "A", "B" or the like. Semantic recognition may be performed on each sample image. For example, a deep learning model can be obtained through training based on deep learning technology in advance, and each sample image is recognized by the deep learning model to obtain, for each character contained in the sample image, a respective probability that the character belongs to each character category. Multiple semantic segmentation images may be obtained based on the probabilities.

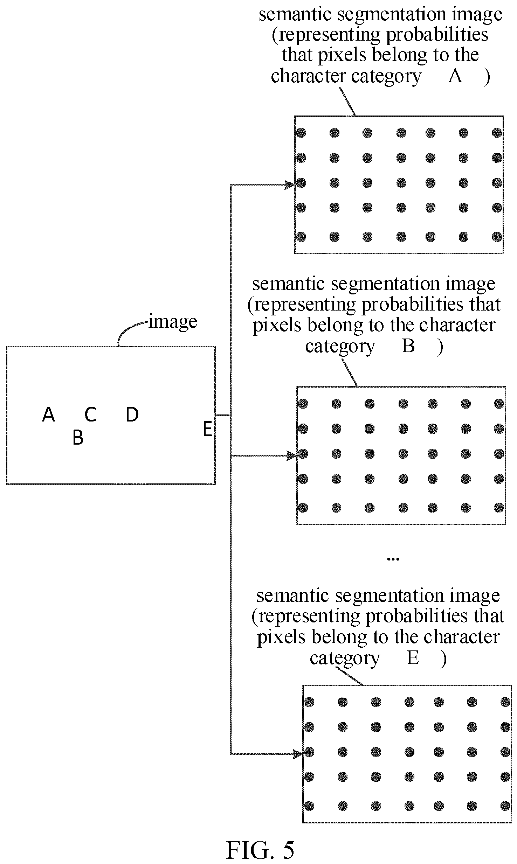

For example, as illustrated in FIG. 5, there are five character categories corresponding to the sample image, where each character category is a specific character, i.e., "A", "B", "C", "D", "E". Five semantic segmentation images of the sample image may be obtained through the recognition. In a first semantic segmentation image, probabilities of all pixels belonging to the character category "A" are represented. In a second semantic segmentation image, probabilities of all pixels belonging to the character category "B" are represented. In a third semantic segmentation image, probabilities of all pixels belonging to the character category "C" are represented. In a fourth semantic segmentation image, probabilities of all pixels belonging to the character category "D" are represented. In a fifth semantic segmentation image, probabilities of all pixels belonging to the character category "E" are represented. Each black dot in the semantic segmentation image represents a respective pixel and a corresponding probability that the pixel belonging to the corresponding character category.

Further, for each character region of the sample image, a respective average probability of probabilities that all pixels within the character region belong to each character category is obtained. A character category corresponding to the maximum average probability is taken as the character category of the character region and each pixel within the character region is assigned with a preset index value corresponding to the character category, to label the character category for each character region. The index value may be in any form. For example, the index value is *Cᵢ,* where *cᵢ* ∈ [0,*C*], 0 represents a background category, and C is the total number of character categories.

The character category may be determined based on a shape feature of a connectivity domain formed by pixels all belonging to a common image feature.

At block 203, a preset neural network model for character recognition is trained based on the sample image set having character regions labelled therein, as well as the character category and the character position code corresponding to each character region.

After training the preset neural network model for character recognition based on the sample image set labelled with character regions, as well as the character categories and the character position codes corresponding to the character regions, the preset neural network model may recognize characters based on the character regions and determine the relative order number of each character and the character sequence based on the character position codes. The neural network model may be trained based on the deep learning technology. For example, the mentioned neural network model may be a Fully Convolutional Network (FCN).

Certainly, for training the neural network model for character recognition, a classification loss function may be adopted for the purpose of optimization. That is, the labelled character categories and the labelled character position codes are compared with the character categories and the character position codes of the sample image input to the neural network model, to calculate a loss value. When the loss value is greater than a preset threshold, a model coefficient of the neural network model is adjusted until the loss value is less than the preset threshold. Theoretically, regression loss functions, such as L2 loss, L1 loss Smooth L1 loss may be used as a loss function.

With the method for character recognition and processing according to the disclosure, the character region is labelled for each character contained in each sample image of the sample image set, and the character category and the character position code are labelled for the character region. In addition, the preset neural network model for character recognition is trained based on the sample image set having labelled character regions, as well as the character category and the character position code corresponding to each character region. Thus, recognized characters are ordered based on the character position codes to obtain the relative order number of each recognized character. A final result is obtained by ordering and combining the recognized characters based on the relative order number, to achieve correctly ordering recognized characters.

After the neutral network model is trained and obtained, given an image for testing, a character segmentation prediction image and a character position code prediction map may be obtained through the neutral network model. Predicted characters and character position codes of the predicted characters are obtained based on the character position code prediction map. The relative order number of each predicted character is obtained based on the character position codes, and the predicted characters are ordered based on the relative character orders. The final result is obtained by combining predicted characters.

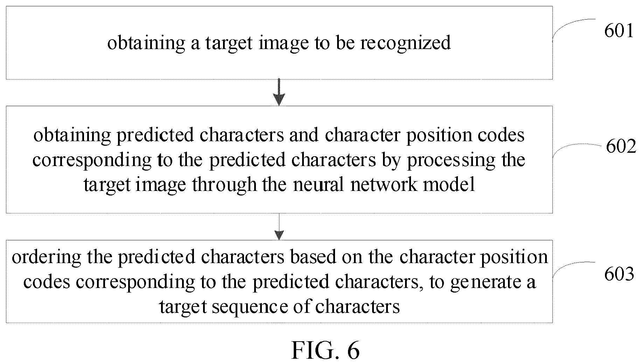

As illustrated in FIG. 6, the method further includes the following.

At block 601, a target image to be recognized is obtained.

The target image includes multiple characters.

At block 602, the target image is processed based on a neural network model, to obtain predicted characters and character position codes corresponding to the predicted characters. Each predicted character corresponds to a respective character position code.

Since a correspondence between images and predicted characters as well as character position codes of the predicted characters is learnt by the neutral network model in advance, the predicted characters and the character position codes can be obtained by processing the target image by the neural network model.

Since the target image itself cannot know the character regions contained therein, the character regions can be obtained by the neural network model through semantic segmentation.

The target image can be segmented based on characters through the neutral network model, to obtain semantic segmentation images. In detail, the target image is inputted to the neutral network model to obtain (C+1) semantic segmentation images, where the size of each semantic segmentation image is the same as the size of the input image, C is the total number of character categories. The extra one semantic segmentation image represents a background image where a probability that each pixel belongs to the background and a probability that each pixel belongs to a character are represented. Each semantic segmentation image represents probabilities that pixels contained in an original image belong to a respective character category corresponding to the semantic segmentation image.

Further, the background image is binarized by the neutral network model to obtain a character binary map.

A connectivity domain of a character in the character binary map may be regarded as a character region corresponding to the character. Further, a position of the character can be obtained by calculating the connectivity domain based on the character binary map. For a semantic segmentation image, an average probability of probabilities that all pixels within a connectivity domain of the semantic segmentation image belong to a corresponding character category is calculated as a probability value that the connectivity domain belongs to the corresponding character category. For each semantic segmentation image, the probability values that the connectivity domains belong to the corresponding character category can be determined in the same manner described above. A character category corresponding to the maximum probability is taken as the character category of the corresponding connectivity domain.

A position index value of each connectivity domain is recognized by the neutral network model and the character position code corresponding to the connectivity domain is determined based on the position index value, which may be referred to the above description.

At block 603, the predicted characters are ordered based on the character position codes corresponding to the predicted characters, to generate a target sequence of characters.

The character position codes can be used to deduce relative order numbers of the predicted characters. Thus, the predicted characters may be ordered based on the character position codes corresponding to the predicted characters, to generate the target sequence of characters.

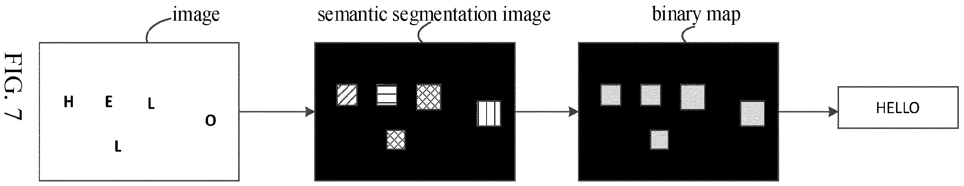

For example, the target image is illustrated in FIG. 7. Total (C+1) semantic segmentation images can be obtained (FIG. 7 illustrates only one semantic segmentation image, in which different character categories are represented by different shadow lines). A binary map is obtained based on a background image, and an average probability of probabilities that pixels within each connectivity domain belong to the character category corresponding to each semantic segmentation image is calculated based on the binary map. The character formed by the connectivity domain may be determined based on the average probabilities. Based on the position index value of the connectivity domain (for example, the position index value of "H" in FIG. 7 is "1") as well as the length threshold of character string, the character position code of each character category is determined, which may be referred to the above description. The predicted characters are ordered based on the character position codes of the predicted characters to generate the target sequence of characters, i.e., "HELLO".

With the method for character recognition and processing according to the disclosure, the target image to be recognized is obtained. The target image is processed by the neural network model to obtain predicted characters and character position codes corresponding to the predicted characters. Further, the predicted characters are ordered based on the character position codes corresponding to the predicted characters to generate the target sequence of characters. Thus, by predicting a character position code for each character, determining a relative order number for each character based on the character position code, and combining the characters, accuracy of determining a character string is determined.

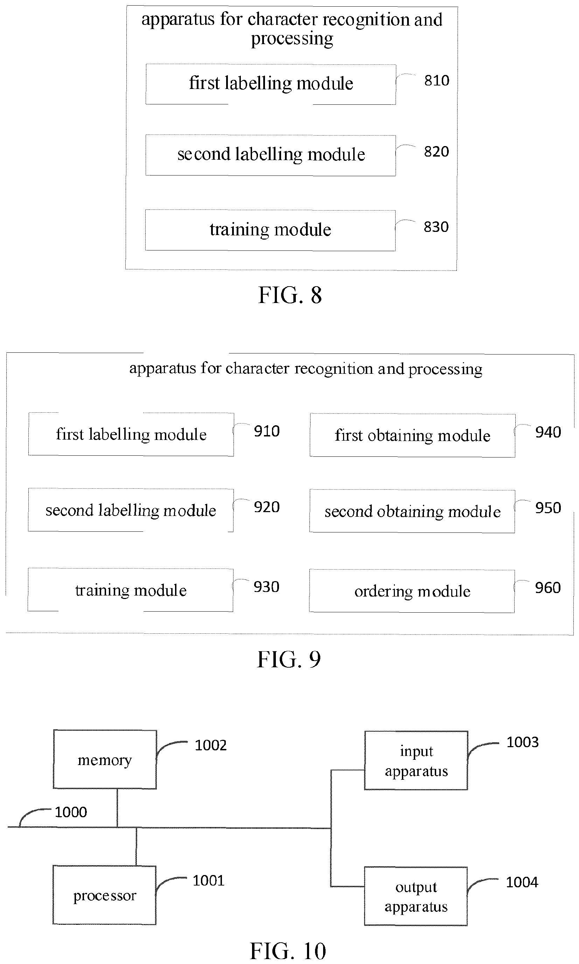

In order to achieve the above embodiments, the disclosure further provides an apparatus for character recognition and processing. FIG. 8 is a block diagram illustrating an apparatus for character recognition and processing according to embodiments of the disclosure. As illustrated in FIG. 8, the apparatus for character recognition and processing includes: a first labelling module 810, a second labelling module 820, and a training module 830.

The first labelling module 810 is configured to label a respective character region for each character contained in each sample image of a sample image set.

The second labelling module 820 is configured to label a respective character category and a respective character position code corresponding to each character region.

The training module 830 is configured to train a preset neural network model for character recognition based on the sample image set having character regions labelled therein, as well as the character categories and the character position codes corresponding to the character regions.

In some examples, the first labelling module 810 is further configured to obtain positional coordinates of a character box corresponding to each character contained in each sample image, contract the character box based on a preset contraction ratio and the position coordinates, and label the character region based on position coordinates of the contracted character box.

The second labelling module 820 is further configured to assign pixels contained in each character region with respective index values that are preset to the character category corresponding to the character region.

The second labelling module 820 is further configured to obtain a preset length threshold of character string; obtain a position index value of each character region; perform a calculation based on the length threshold of character string and the position index value through a preset algorithm, and label the character position code corresponding to each character region based on a calculation result.

It is to be noted that the foregoing explanation of method embodiments of the method for character recognition and processing also applies to the apparatus for character recognition and processing in apparatus embodiments. The implementation principles are similar, which are not repeated here.

As illustrated in Fig. 9, the apparatus for character recognition and processing includes: a first labelling module 910, a second labelling module 920, a training module 930, a first obtaining module 940, a second obtaining module 950 and an ordering module 960. The first labelling module 910, the second labelling module 920 and the training module 930 are configured to execute the same functions with the above first labelling module 810, the second labelling module 820 and the training module 830 respectively, which will not be repeated here.

The first obtaining module 940 is configured to obtain a target image to be recognized.

The first obtaining module 950 is configured to process the target image through a neural network model, to obtain predicted characters and character position codes corresponding to the predicted characters. Each character position code corresponds to a respective predicted character.

The ordering module 960 is configured to order the predicted characters based on the character position codes corresponding to the predicted characters, to generate a target sequence of characters.

It is to be noted that the foregoing explanation of method embodiments of the method for character recognition and processing are also applicable to the apparatus for character recognition and processing in apparatus embodiments. The implementation principles are similar, which are not repeated here.

The disclosure further provides an electronic device and a readable storage medium.

FIG. 10 is a block diagram illustrating an electronic device for implementing a method for character recognition and processing according to embodiments of the disclosure. The electronic device is intended to represent various types of digital computers, such as laptop computers, desktop computers, workstations, personal digital assistants, servers, blade servers, mainframe computers, and other suitable computers. The electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As illustrated in FIG. 10, the electronic device includes: one or more processors 1001, a memory 1002, and an interface configured to connect various components, including a high-speed interface and a low-speed interface. The various components are connected to each other with different buses, and may be installed on a public main board or installed in other ways as needed. The processor may process instructions executed in the electronic device, including instructions stored in or on the memory to display graphical information of the GUI on an external input/output device (such as a display device coupled to an interface). In other implementation, multiple processors and/or multiple buses may be configured with multiple memories if necessary. Similarly, the processor may connect a plurality of electronic devices, and each device provides a part of necessary operations (for example, as a server array, a group of blade servers, or a multi-processor system). FIG. 10 takes one processor 1001 as an example.

The memory 1002 is a non-transitory computer-readable storage medium according to the disclosure. The memory stores instructions executable by the at least one processor to cause the at least one processor to execute a method for character recognition and processing according to disclosure. The non-transitory computer-readable storage medium according to the disclosure is configured to store computer instructions. The computer instructions are configured cause a computer to execute the method for character recognition and processing according to embodiments of the disclosure.

As a non-transitory computer-readable storage medium, the memory 1002 may be configured to store non-transitory software programs, non-transitory computer-executable programs and modules, such as program instructions/modules corresponding to a method for character recognition processing in the embodiment of the present disclosure. The processor 1001 executes various functional applications and data processing of the server by running a non-transitory software program, an instruction, and a module stored in the memory 1002, that is the method for character recognition and processing in the above method embodiments is implemented.

The memory 1002 may include a program storage area and a data storage area. The program storage area may store operation systems and application programs required by at least one function. The data storage area may store data created based on the use of an electronic device for character recognition processing. In addition, the memory 1002 may include a high-speed random-access memory, and may also include a non-transitory memory, such as at least one magnetic disk storage device, a flash memory device, or other non-transitory solid-state storage devices. In some examples, the memory 1002 optionally includes a memory set remotely relative to the processor 1001 that may be connected to an electronic device for character recognition and processing via a network. The example of the above networks includes but not limited to an Internet, an enterprise intranet, a local area network, a mobile communication network and their combination.

The electronic device for implementing the method for character recognition and processing may further include an input apparatus 1003 and an output apparatus 1004. The processor 1001, the memory 1002, the input apparatus 1003, and the output apparatus 1004 may be connected through a bus or in other ways. FIG. 10 takes connection through a bus as an example.

The input apparatus 1003 may receive input digital or character information, and generate key signal input related to user setting and function control of an electronic device for character recognition processing, such as a touch screen, a keypad, a mouse, a track pad, a touch pad, an indicating rod, one or more mouse buttons, a trackball, a joystick and other input apparatuses. The output apparatus 1004 may include a display device, an auxiliary lighting apparatus (for example, a LED) and a tactile feedback apparatus (for example, a vibration motor), etc. The display device may include but not limited to a liquid crystal display (LCD), a light emitting diode (LED) display and a plasma display. In some implementations, a display device may be a touch screen.

Various implementation modes of the systems and technologies described herein may be implemented in a digital electronic circuit system, an integrated circuit system, a dedicated ASIC (application specific integrated circuit), a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

The computer programs (also called as programs, software, software applications, or codes) include machine instructions of a programmable processor, and may be implemented with high-level procedure and/or object-oriented programming languages, and/or assembly/machine languages. As used herein, the terms "a machine-readable medium" and "a computer-readable medium" refer to any computer program product, device, and/or apparatus configured to provide machine instructions and/or data for a programmable processor (for example, a magnetic disk, an optical disk, a memory, a programmable logic device (PLD)), including a machine-readable medium that receive machine instructions as machine-readable signals. The term "a machine-readable signal" refers to any signal configured to provide machine instructions and/or data for a programmable processor.

In order to provide interaction with the user, the systems and technologies described here may be implemented on a computer, and the computer has: a display apparatus for displaying information to the user (for example, a CRT (cathode ray tube) or an LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a voice input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), an internet and a blockchain network.

The computer system may include a client and a server. The client and server are generally far away from each other and generally interact with each other through a communication network. The relation between the client and the server is generated by computer programs that run on the corresponding computer and have a client-server relationship with each other. A server may be a cloud server, also known as a cloud computing server or a cloud host, is a host product in a cloud computing service system, to solve the shortcomings of large management difficulty and weak business expansibility existed in the traditional physical host and Virtual Private Server (VPS) service. A server further may be a server with a distributed system, or a server in combination with a blockchain. A server further may be a server with a distributed system, or a server in combination with a blockchain.

In order to achieve the above embodiment, the disclosure further provides a computer program product. When instructions stored in the computer program product are executed by a processor, the method for character recognition and processing described above is executed.

It is to be understood that, various forms of procedures shown above may be configured to reorder, add or delete blocks. For example, blocks described in the disclosure may be executed in parallel, sequentially, or in a different order, as long as the desired result of the technical solution disclosed in the disclosure may be achieved, which will not be limited herein.

The above specific implementations do not constitute a limitation on the protection scope of the disclosure. Those skilled in the art should understand that various modifications, combinations, sub-combinations and substitutions may be made according to design requirements and other factors. Any modification, equivalent replacement, improvement, etc., made within the spirit and principle of embodiments of the disclosure shall be included within the protection scope of embodiments of the disclosure.

## Claims

1. A method for character recognition and processing, comprising:
labelling (201) a respective character region for each character contained in each sample image of a sample image set;
labelling (202) a respective character category and a respective character position code corresponding to each character region; and
training (203) a preset neural network model for character recognition based on the sample image set having labelled character regions, as well as character categories and character position codes corresponding to the character regions.

2. The method of claim 1, wherein labelling (201) the respective character region for each character contained in each sample image of the sample image set comprises:
obtaining positional coordinates of a character box corresponding to each character contained in each sample image; and
obtaining a contracted character box by contracting the character box based on a preset contraction ratio and the positional coordinates, and labelling the character region based on positional coordinates of the contracted character box.

3. The method of claim 1 or 2, wherein labelling (202) the respective character category corresponding to each character region comprises:
assigning pixels contained in the character region with preset index values of the character category in the character region.

4. The method of any one of claims 1 to 3, wherein labelling (202) the respective character position code corresponding to each character region comprises:
obtaining a preset length threshold of character string;
obtaining a position index value of the character region; and
obtaining a calculation result by performing a calculation based on the preset length threshold of character string and the position index value through a preset algorithm, and labelling the character position code corresponding to the character region based on the calculation result.

5. The method of any of claims 1 to 4, further comprising:
obtaining (601) a target image to be recognized;
obtaining (602) predicted characters and character position codes of the predicted characters by processing the target image through the preset neural network model, each predicted character corresponding to a respective character position code;
ordering (603) the predicted characters based on the character position codes corresponding to the predicted characters, to generate a target sequence of characters.

6. An apparatus for character recognition and processing, comprising:
a first labelling module (810; 910), configured to label a character region for each character contained in each sample image of a sample image set;
a second labelling module (820; 920), configured to label a respective character category and a respective character position code corresponding to each character region; and
a training module (830; 930), configured to train a preset neural network model for character recognition based on sample image set having labelled character regions, as well as character categories and character position codes corresponding to the character regions.

7. The apparatus of claim 6, wherein the first labelling module (810; 910) is further configured to:
obtain positional coordinates of a character box corresponding to each character contained in each sample image; and
obtain a contracted character box by contracting the character box based on a preset contraction ratio and the positional coordinates, and label the character region based on positional coordinates of the contracted character box.

8. The apparatus of claim 6 or 7, wherein the second labelling module (820; 920) is further configured to:
assign pixels contained in the character region with preset index values of the character category in the character region.

9. The apparatus of any one of claims 6 to 8, wherein the second labelling module (820; 920) is further configured to:
obtain a preset length threshold of character string;
obtain a position index value of the character zone; and
obtain a calculation result by performing a calculation based on the preset length threshold of character string and the position index value through a preset algorithm, and label the character position code corresponding to the character region based on the calculation result.

10. The apparatus of any one of claims 6 to 9, further comprising:
a first obtaining module (940), configured to obtain a target image to be recognized;
a second obtaining module (950), configured to obtain predicted characters and character position codes of the predicted characters by processing the target image through the preset neural network model, each predicted character corresponding to a respective character position code; and
an ordering module (960), configured to order the predicted characters based on the character position codes corresponding to the predicted characters, to generate a target sequence of characters.

11. An electronic device (1000), comprising:
at least one processor (1001); and
a memory (1002) communicatively coupled to the at least one processor (1001); wherein,
the memory (1002) stores instructions executable by the at least one processor (1001), and when the instructions are executed by the at least one processor (1001), the at least one processor (1001) is configured to execute a method for character recognition and processing of any one of claims 1 to 5.

12. A non-transitory computer-readable storage medium, having computer instructions stored thereon, wherein the computer instructions are configured to cause a computer to execute a method for character recognition and processing of any one of claims 1 to 5.

13. A computer program product, wherein when instructions stored in the computer program executed a processor, a method for character recognition and processing of any of claims 1 to 5 is executed.
